# EUROPÄISCHE PATENTANMELDUNG

(11) **EP 1 916 148 A1**
(43) Veröffentlichungstag der Anmeldung: **30.04.2008**
(21) Anmeldenummer: 06450154.7
(22) Anmeldetag: 27.10.2006
(51) Int. Cl.: B60N 2/24, B60N 2/42, F41H 7/02

(54) **Sitz für ein gepanzertes Fahrzeug**

(71) Anmelder: Steyr-Daimler-Puch Spezialfahrzeug GmbH, 1111 Wien (AT)
(72) Erfinder: Kumpf, Bernhard, A-2401 Fischamend (AT); Straßgürtl, Anton, A-2432 Schwadorf (AT); Skoff, Gerhard, A-1230 Wien (AT); Forstner, Thomas, A-3464 Hausleiten (AT)
(74) Vertreter: Rippel, Andreas

(57) **Zusammenfassung**

Ein Sitz für ein gepanzertes Fahrzeug zum Schutz gegen Landminen besteht aus einem Rahmen (2), einem Sitzrahmen (3), einer Sitzbespannung mit einer Sitzfläche (5), einer Rückenlehne und zwei seitlichen, in den Sitzbezug integrierten elastischen Traggurten (4) sowie einem Rückhaltesystem (7,8). Der Sitzrahmen (3) ist mit einer am Fahrzeugdach befestigten Aufhängung (1) verbunden.
Die Aufhängung (1) des Sitzrahmens (3) am Fahrzeugdach ist seitlich mit dem Sitzrahmen (3) verbunden.
Dadurch wird eine größere Freizügigkeit bei der Anbringung des Sitzes erreicht.

## Beschreibung

Die Erfindung bezieht sich auf einen Sitz für ein gepanzertes Fahrzeug zum Schutz gegen Landminen, dessen mit einem Sitzbezug bespannter Sitzrahmen mit einer am Fahrzeugdach befestigten Aufhängung verbunden ist.

Landminen sind aufgrund ihrer extrem hohen Zerstörungskraft verbunden mit einem häufigen Vorkommen in Krisen- und Kriegsgebieten eine große Gefahr für Fahrzeuge und deren Besatzung. Da insbesondere bei friedenssichemden Einsätzen die Wahrscheinlichkeit auf Minen aufzufahren hoch ist, werden auch bei leicht gepanzerten Fahrzeugen höchste Anforderungen an den Schutz gegen Landminen gestellt.

Ein effektiver Schutz für die Mannschaft hängt wesentlich von der Gestaltung der Sitze und deren Befestigung im gepanzerten Fahrzeug ab. Eine Befestigung der Sitze am Boden bzw. an der Fahrzeugaußenwand ist für eine minengeschützte Ausführung untauglich, da bei einer Minendetonation die der Detonation zugewandte Fahrzeugaußenkontur, in den meisten Fällen der Fahrzeugboden und der untere Bereich der Fahrzeugaußenwand, so sehr beschleunigt und dynamisch verformt wird, dass die auf die Insassen übertragenen Kräfte ein Vielfaches der physiologisch zulässigen Beschleunigung beträgt.

In EP 1 382 932 A1 ist ein Sicherheitssitzsystem beschrieben, das auf diese erforderliche Entkoppelung der Sitze vom Fahrzeugboden und von der Fahrzeugseitenwand Rücksicht nimmt, indem der Sitz vom Fahrzeugdach abgehängt und gegen den Fußboden verspannt wird. Derartige Sitze haben aber den wesentlichen Nachteil, dass sie ihren Schutz nur bei unverformter Bodenstruktur beibehalten. Aufgrund der erheblichen dynamischen Durchbeulung der Bodenstruktur kann der Sitz seine durch die gespannten Gurte vorgegebene stabile Fixierung verlieren, und damit auch seine starre Form, da die am Boden befestigten Gurte gelockert werden. Diese Lockerung der Spanngurte nimmt dem Sicherheitssitzsystem seine zur Schutzfunktion erforderliche steife Form, und das Sitzsystem kann die zur Schutzfunktion erforderliche aufrechte Sitzhaltung in Bezug auf die Beschleunigungsrichtung nicht mehr gewährleisten, so dass im schlimmsten Falle die Insassen sogar mitsamt ihrem Sitz, trotz eines intakten Rückhaltesystems, gegen die Fahrzeugdecke geschleudert werden.

Ähnliche Sicherheitssitzsysteme sind in US 3 868 143, in DE 43 03 719 A1 und in US 2 829 702 beschrieben.

In der EP 1 593 542 A2 ist ein Sitz der eingangs genannten Art beschrieben, bei dem die Aufhängung des Sitzes als Aufhängungsgestänge ausgebildet ist. Dieses Aufhängungsgestänge kann vom Fahrzeugboden vollkommen entkoppelt werden.

Die Erfindung hat es sich zum Ziel gesetzt, die im obgenannten Dokument beschriebene Erfindung weiter zu entwickeln.

Erreicht wird dies dadurch, dass die Aufhängung des Sitzrahmens am Fahrzeugdach seitlich mit dem Sitzrahmen verbunden ist. Dadurch wird eine größere Freizügigkeit bei der Anbringung des Sitzes erreicht.

Im Rahmen der Erfindung kann die Aufhängung als Aufhängungsgestänge oder als vom Fahrzeugdach abgehängte Trennwand ausgebildet sein.

Zur Höhenverstellung des Sitzes kann eine arretierbare Schiebeführung vorgesehen sein.

Nachstehend ist die Erfindung anhand von in den Zeichnungen dargestellten Ausführungsbeispielen näher beschrieben, ohne auf diese Beispiele beschränkt zu sein.
Dabei zeigen:
Fig. 1 einen erfindungsgemäßen Sitz in Ansicht schräg von hinten;
Fig. 2 den in Fig. 1 dargestellten Sitz in Ansicht schräg von vorne;
Fig. 3 einen anderen Sitz nach der Erfindung in Ansicht schräg von hinten;
Fig. 4 den Sitz nach Fig. 3 in Ansicht schräg von vorne.

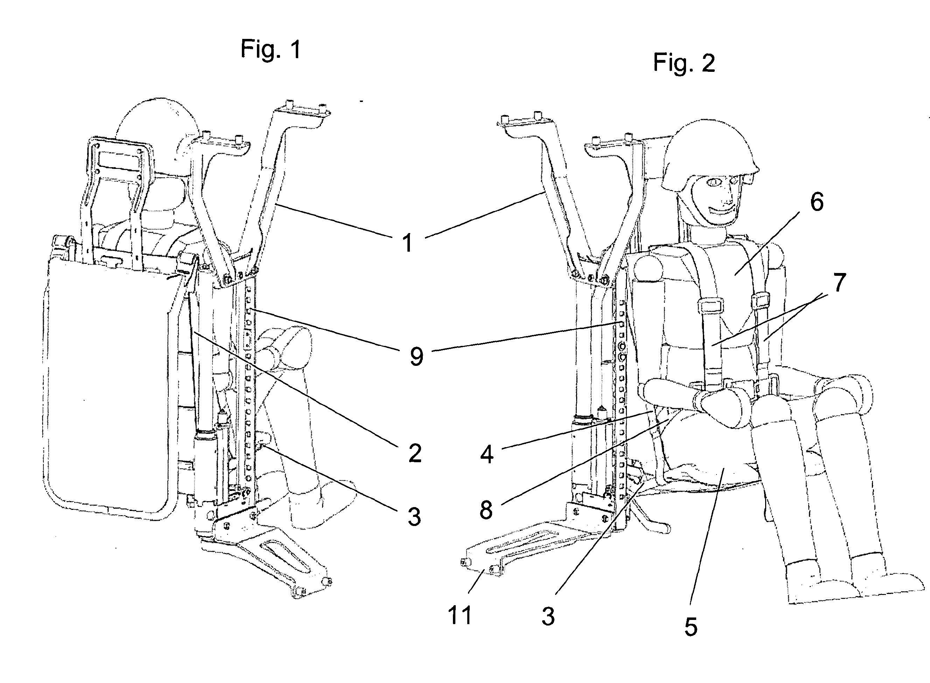

Gemäß den Fig. 1 und 2 ist ein Aufhängungsgestänge 1 angeordnet, das vom Fahrzeugdach (nicht dargestellt) abgehängt ist. Mit dem Aufhängungsgestänge 1 ist ein Rahmen 2 verbunden, an dem ein Sitzrahmen 3 befestigt ist. Eine mögliche Ausführungsform einer unteren Sitzbefestigung ist eine seitliche Einbindung entweder über ein hier nicht näher dargestelltes Gehänge vom Fahrzeugdach oder an einer vom Fahrzeugdach abgehängten Trennwand 10 mittels eines Sitzträgers 11.

Dieser Sitzrahmen 3 ist mit einer Sitzbespannung versehen, die insbesondere aus zwei elastischen Gurten 4, einer Sitzfläche 5 und einer (nicht dargestellten) Rückenlehne besteht. Diese Teile sind zweckmäßig alle miteinander verbunden, vorzugsweise vernäht. Die Sitzbespannung besteht aus einem elastischen Material, vorzugsweise Textil, das zur Erhöhung des individuellen Personenschutzes je nach Anforderung auch aus einem Splitterschutzgewebe bestehen kann oder in das zusätzlich ein ein- oder mehrlagiges Splitterschutzmaterial eingebracht ist.

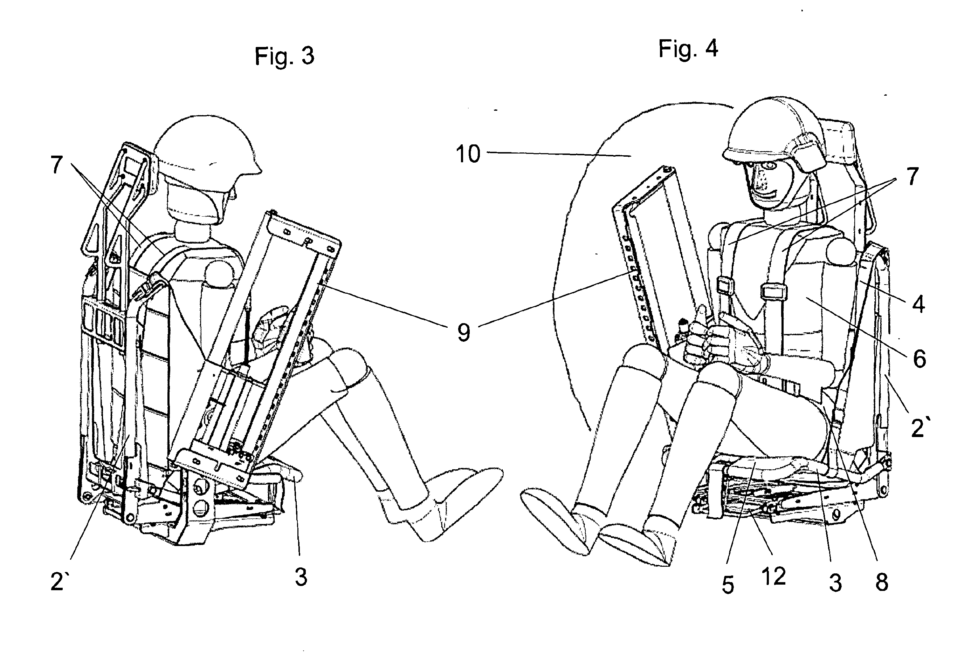

Der elastische Gurt 4 kann, wie beispielhaft in Fig. 1 und 3 dargestellt, direkt am Sitzrahmen 2 befestigt werden, wobei für eine Verbesserung der elastischen Kraftaufnahme der elastische Gurt 4 auch am oberen Ende des Sitzrahmens 2 umgelenkt und ein beliebiges Stück weiter unten am Sitzrahmen 2 befestigt werden kann.

Die Fixierung der Insassen 6 im Sitz erfolgt sowohl mit einem Hosenträgergurt 7 als auch mit einem Bauchgurt 8.

Um eine Höhenverstellung des Sitzes zu ermöglichen ist eine arretierbare Schiebeführung 9 vorgesehen.

Bei der Ausführungsform nach den Fig. 3 und 4 erfolgt die Aufhängung 9 des Sitzes am Fahrzeugdach über eine vom Fahrzeugdach abgehängte Trennwand 10. Um eine Anpassung des Sitzes in Längsrichtung zu ermöglichen, ist in die Verbindung zwischen der Aufhängung 9 und dem Sitzrahmen 3 eine klemm- oder arretierbare Vorrichtung eingebracht, mittels der der Sitzrahmen 3 und damit der gesamte Sitz auf der Aufhängung längsverschoben werden kann.

Bei einer Minendetonation unter dem Fahrzeug werden die Insassen 6 in die ergonomisch ausgeformte Sitzbespannung am Sitzrahmen 3 hineingedrückt, die aufgrund des elastischen Materials des Gurtes 4 die Beschleunigungskraft, die auf die Insassen 6 zum Wirken kommt, reduziert. In der Gegenrichtung werden die Insassen 6 durch den Sicherheitsgurt 7, 8 gehalten.

## Patentansprüche

1. Sitz für ein gepanzertes Fahrzeug zum Schutz gegen Landminen, bestehend aus einem Rahmen (2), einem Sitzrahmen (3), einer Sitzbespannung mit einer Sitzfläche (5), einer Rückenlehne und zwei seitlichen, in den Sitzbezug integrierten elastischen Traggurten (4) sowie einem Rückhaltesystem (7, 8), wobei der Sitzrahmen (3) mit einer am Fahrzeugdach befestigten Aufhängung (1) verbunden ist, **dadurch gekennzeichnet, dass** die Aufhängung (1) des Sitzrahmens (3) am Fahrzeugdach seitlich mit dem Sitzrahmen (3) verbunden ist.

2. Sitz nach Anspruch 1, **dadurch gekennzeichnet, dass** die Aufhängung als Aufhängungsgestänge (1) ausgebildet ist.

3. Sitz nach Anspruch 1, **dadurch gekennzeichnet, dass** die Aufhängung als vom Fahrzeugdach abgehängte Trennwand (10) integriert ist.

4. Sitz nach einem der Ansprüche 1 bis 3, **dadurch gekennzeichnet, dass** zur Höhenverstellung des Sitzes eine arretierbare Schiebeführung in der Aufhängung vorgesehen ist.

5. Sitz nach einem der Ansprüche 1 bis 4, **dadurch gekennzeichnet, dass** zur Längsverschiebung des Sitzes der Sitzrahmen (3) auf der Aufhängung (9) mittels einer klemm- oder arretierbaren Vorrichtung (12) längsverschiebbar ist.

## Geänderte Patentansprüche

### Geänderte Patentansprüche gemäss Regel 137(2) EPÜ.

**1.** Sitz für ein gepanzertes Fahrzeug zum Schutz gegen Landminen, bestehend aus einem Tragrahmen (2), einem Sitzrahmen (3), einer Sitzbespannung mit einer Sitzfläche (5), einer Rückenlehne und zwei seitlichen, in den Sitzbezug integrierten elastischen Traggurten (4) sowie einem Rückhaltesystem (7,8), dessen Sitzrahmen (3) mit einer am Fahrzeugdach befestigten Aufhängung (1) verbunden ist, **dadurch gekennzeichnet, dass** die elastischen Traggurte (4) am Tragrahmen (2) befestigt sind und die Aufhängung (1) des Tragrahmens (2) am Fahrzeugdach in Blickrichtung des Insassen seitlich mit dem Tragrahmen (2) verbunden ist.

**2.** Sitz nach Anspruch 1, **dadurch gekennzeichnet, dass** die Aufhängung als Aufhängungsgestänge ausgebildet ist.

**3.** Sitz nach Anspruch 1, **dadurch gekennzeichnet, dass** die Aufhängung in eine vom Fahrzeugdach abgehängte Trennwand (10) integriert ist.

**4.** Sitz nach einem der Ansprüche 1 bis 3, **dadurch gekennzeichnet, dass** zur Höhenverstellung des Sitzes eine arretierbare Schiebeführung (9) in die Aufhängung (1) vorgesehen ist.

**5.** Sitz nach einem der Ansprüche 1 bis 4, **dadurch gekennzeichnet, dass** zur Längsverschiebung des Sitzes der Tragrahmen (2) auf der Aufhängung (1) mittels einer klemm- oder arretierbaren Vorrichtung (12) längsverschiebbar ist.
